## Europäisches Patentamt

## European Patent Office

## Office européen des brevets

(19)

(11) Veröffentlichungsnummer: **0 118 104**
**B1**

(12) **EUROPÄISCHE PATENTSCHRIFT**

(45) Veröffentlichungstag der Patentschrift:
**01.06.88**

(21) Anmeldenummer: **84102156.1**

(22) Anmeldetag: **01.03.84**

(51) Int. Cl.⁴: **G 04 G 15/00**

(54) **Empfangsgerät der Unterhaltungselektronik mit einem Programmwunschspeicher.**

(30) Priorität: **05.03.83 DE 3307885**

(43) Veröffentlichungstag der Anmeldung:
**12.09.84 Patentblatt 84/37**

(45) Bekanntmachung des Hinweises auf die Patenterteilung:
**01.06.88 Patentblatt 88/22**

(84) Benannte Vertragsstaaten:
**AT FR GB IT NL**

(56) Entgegenhaltungen:
**EP - A - 0 041 121**
**DE - A - 2 445 520**
**GB - A - 2 034 995**

**NACHRICHTENTECHNISCHE ZEITSCHRIFT, Band 35, Nr. 6, Juni 1982, Seiten 368-376, Schwäbisch Gmünd, DE; H. ECKHARD KRÜGER: "Das digitale Fernsehkennungssystem ZPS"**

(73) Patentinhaber: **ALCATEL N.V.,
Strawinskylaan 537 (World Trade Center), Amsterdam (NL)**

(72) Erfinder: **Apitz, Siegfried, L.-Windthorst-Strasse 24, D-7530 Pforzheim (DE)**

(74) Vertreter: **Pohl, Heribert, Dipl.-Ing et al, Standard Elektrik Lorenz AG Patent- und Lizenzwesen Postfach 30 09 29, D-7000 Stuttgart 30 (DE)**

## Beschreibung

Die Erfindung betrifft ein Empfangsgerät der Unterhaltungselektronik der im Oberbegriff des Patentanspruches 1 angegebenen Art. Ein derartiges Empfangsgerät ist beispielsweise aus der EP-A 0 042 600 bekannt. Das bekannte Empfangsgerät enthält einen Empfangsteil, der von einer Programmiereinrichtung gesteuert wird. Vom Benutzer aus Rundfunk- oder Fernsehprogrammen ausgewählte Programmwünsche werden über eine Eingabevorrichtung in den Programmwunschspeicher dieser Programmiereinrichtung eingegeben. In einer Vergleicheranordnung dieser Programmiereinrichtung werden die im Programmwunschspeicher gespeicherten Daten mit der Zeitausgabe einer der Programmiereinrichtung angehörenden Kalenderuhr verglichen und bei einer Zeitidentität das Empfangsteil des bekannten Empfangsgerätes über ein Steuerteil entsprechend eingestellt.

Bei einem derartigen Empfangsgerät werden somit die in dem Programmwunschspeicher gespeicherten Programmwünsche ausschliesslich von der Kalenderuhr des Empfangsgerätes abgerufen und das Empfangsgerät dementsprechend eingestellt, ohne Rücksicht darauf, ob das dem Programmwunsch entsprechende Sendungsprogramm von dem im Programmwunsch definierten Sender tatsächlich zu der im Programmwunsch angegebenen Zeiten übertragen wird. Vielfach kommt es nämlich bei der Übertragung von in Rundfunk- und/oder Fernsehprogrammen angekündigten Programmsendungen vor, dass die Sendezeit der Übertragung des Sendungsprogrammes verschoben und/oder in ihrer Zeitausdehnung verändert wird. Dann wird die Sendung unvollständig wiedergegeben oder – was noch schlimmer ist – auf ein Speichermedium zur späteren Wiedergabe aufgenommen. Ausserdem enthält das Aufnahmemedium in diesem Fall während der Aufnahmezeit nicht gewünschte Programmteile.

Andererseits ist es beispielsweise aus der EP-A 0 041 121 bekannt, gleichzeitig mit der Übertragung eines Sendungsprogrammes eine Sendungskennung mit zu übertragen, die sowohl Senderkennungsdaten des übertragenden Senders als auch Programmkennungsdaten zur Kennzeichnung des übertragenen Sendungsprogrammes enthalten. Die angegebene Offenlegungsschrift offenbart ausserdem ein Empfangsgerät der Unterhaltungselektronik, an dessen Demodulatorausgang eine Datenabtrennschaltung angeschlossen ist, die die Sendungskennungsdaten aus dem Nutzsignal abtrennt und zur weiteren Verarbeitung an ihrem Ausgang ausgibt. Die Daten der im Programmwunschspeicher eingespeicherten Programmwünsche können mit den an der Datenabtrennstufe ausgegebenen Daten verglichen werden, so dass auch bei Programmänderungen eine zuverlässige Aufzeichnung der Programmwünsche dadurch ermöglicht wird. Allerdings ist es bei einem derartigen Empfangsgerät erforderlich, dass nahezu seine gesamte Signalübertragungsschaltung empfangs- und übertragungsfähig geschaltet ist, das Gerät somit mit einer Stummschaltung im wesentlichen eingeschaltet ist. Ausserdem können bei einem Programmwunschspeicher, der zur Aufnahme einer grossen Anzahl Programmwünsche vorgesehen ist, dann, wenn er eine grosse Anzahl Programmwünsche enthält, ein verhältnismässig grosser Zeitaufwand für einen Abfrageumlauf des Programmwunschspeichers auftreten und dadurch gegebenenfalls der Anfang eines erkannten Programmwunsches beim Einschalten der Aufnahme und/oder Wiedergabe verlorengehen.

Der Erfindung liegt deshalb die Aufgabe zugrunde, ein Empfangsgerät der im Oberbegriff des Patentanspruches 1 angegebenen Art derart auszugestalten, dass die Signalübertragungsschaltungen des Empfangsgerätes während der Überwachung der Programmwünsche im Programmwunschspeicher nicht dauernd eingeschaltet sind. Diese Aufgabe wird nach der Erfindung durch die im kennzeichnenden Teil des Patentanspruches 1 angegebenen technischen Merkmale gelöst.

Die Erfindung weist nicht nur den Vorteil auf, dass durch das Zeitfenster, in das die Programmwünsche eingekleidet sind, die Einschaltzeit umfangreicher Schaltungsanordnungen des Empfangsgerätes wesentlich eingeschränkt wird, sondern auch, eine wesentliche Verkürzung der Zeit eines Prüfzyklus ohne die Zeit der Prüfung eines Programmwunsches dadurch einzuschränken, da im allgemeinen der Prüfzeitpunkt im Zeitfenster nur eines Teiles der im Programmwunschspeicher gespeicherten Programmwünsche liegt und nur diese Programmwünsche geprüft werden.

Die abhängigen Ansprüche kennzeichnen vorteilhafte Ausgestaltungen und Weiterbildungen der Erfindung.

Die Erfindung wird nachfolgend anhand einiger vorteilhafter Ausführungsbeispiele näher erläutert. In den zugehörigen Zeichnungen zeigen

Fig. 1 eine schematische Darstellung eines Programmwunsches mit einem Zeitfenster,

Fig. 2 und Fig. 4 ein Blockschaltbild je eines Empfangsgerätes mit einer Schaltungsanordnung zum Auffinden der Übertragung ausgewählter und in einem Programmwunschspeicher gespeicherter Programmsendungen,

Fig. 3 ein Zustandsdiagramm zum Betriebsablauf eines in Fig. 2 dargestellten Empfangsgerätes während der Überwachung und dem Empfang verschiedener Programmwünsche,

Fig. 5 ein Flussdiagramm des Betriebsablaufes des in Fig. 4 dargestellten Empfangsgerätes.

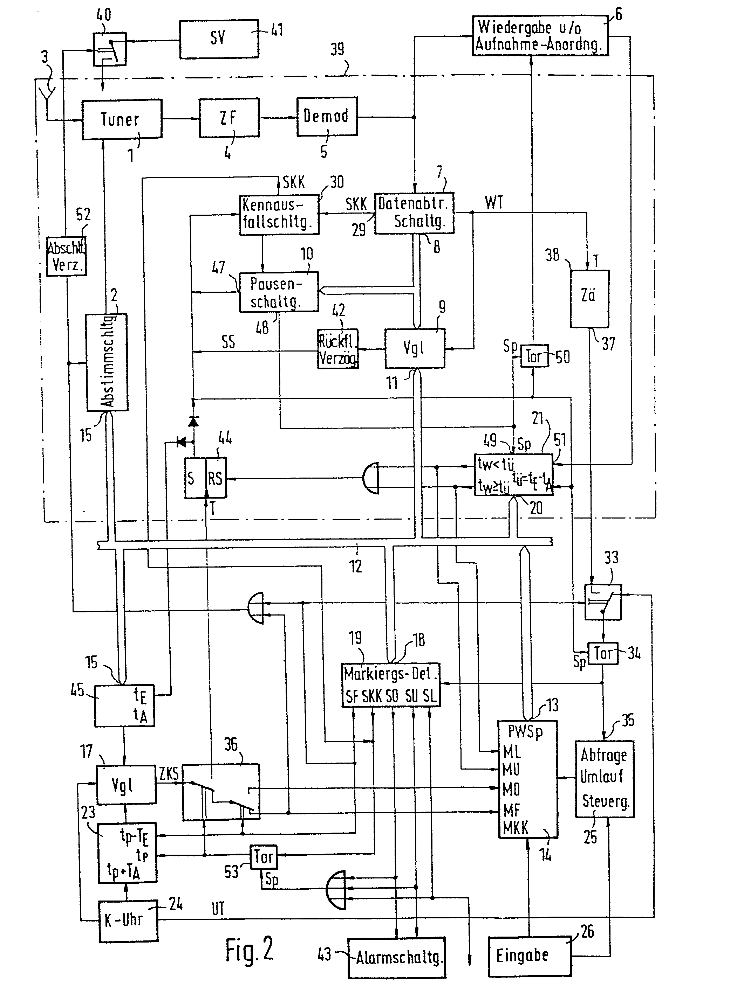

In Fig. 2 ist schematisch in der Gestalt eines Blockschaltbildes ein Empfangsgerät der Unterhaltungselektronik, beispielsweise eines Videorecorders, mit einer Schaltungsanordnung zum Auffinden der Übertragung vom Benutzer ausgewählter und in einem Programmwunschspeicher eingespeicherten Programmsendungen dargestellt. Die Nutzsignalübertragungsschaltung des
Empfangsgerätes enthält einen Tuner 1, der mittels einer Abstimmschaltung 2 auf eine an der
Antenne 3 anliegende Trägerwelle abgestimmt
werden kann, einen ZF-Verstärker 4, eine Demodulatorschaltung 5 und eine Aufnahme- und/-
oder Wiedergabeanordnung 6, die beispielsweise
bei einem Fernsehgerät eine Ton- und Bildwiedergabeanordnung und bei einem Videorecorder eine Bandaufnahmeanordnung ist. An den
Ausgang der Demodulatorschaltung 5 ist eine
Datenabtrennschaltung 7 angeschlossen, deren
Datenausgang 8 mit einer Datenvergleicheranordnung 9 und einer Pausenschaltung 10 verbunden ist. Die Datenabtrennschaltung 7 erkennt
Sendungskennungsdaten, die vom empfangenen
Sender über dessen Trägerwelle gleichzeitig mit
dem Nutzsignal zur Kennung der Sendung übertragen werden, und gibt die Daten dieser Sendungskennung an ihrem Datenausgang 8 aus. An
den zweiten Vergleichereingang 11 der Datenvergleicheranordnung 9 ist ein Datenbus 12 angelegt, an den der Datenein- und -ausgang 13 des
Programmwunschspeichers 14, der Dateneingang 15 der Abstimmschaltung 2, der eine Dateneingang 16 einer Zeitvergleicheranordnung 17,
der Dateneingang 18 eines Markierungsdetektors
19 und der Dateneingang 20 einer Übertragungszeituhr 21 angeschlossen ist. Der Dateneingang
16 der Zeitvergleicheranordnung 17 enthält einen
Zeitdatenumschalter 22, der vom Empfang der
Anfangszeit $t_A$ der auf dem Datenbus 12 befindlichen Daten eines Programmwunsches auf dessen Endzeit $t_E$ umschaltbar ist. Der zweite Vergleichereingang der Zeitvergleicheranordnung 17
ist über einen Zeitfensterrechner 23 mit einer Kalenderuhr 24 verbunden. Eine Steuerschaltung 25
steuert abhängig von einem Uhrentakt UT der Kalenderuhr 24 oder einem Wiederholungstakt WT
der Datenabtrennschaltung 7 den Abfrageumlauf
des Programmwunschspeichers 14. Die Programmwünsche können vom Benutzer über eine
Eingabevorrichtung 26 in den Programmwunschspeicher 14 eingespeichert werden.

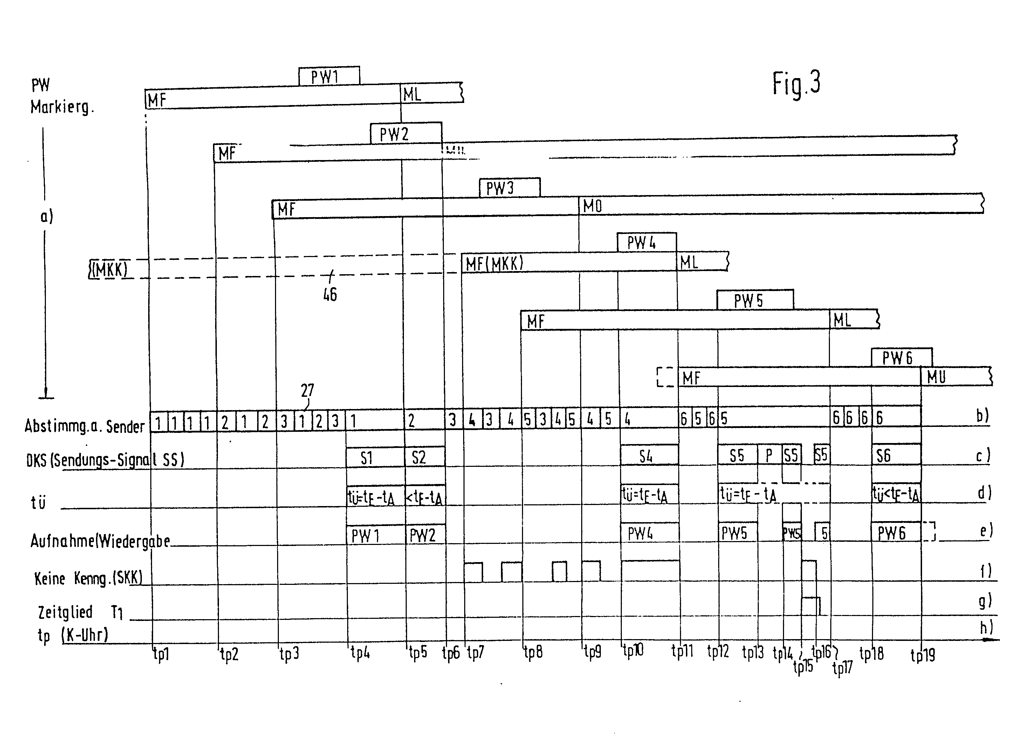

Die Wirkungsweise der an den Übertragungsweg des Nutzsignales des Empfangsgerätes angeschlossenen Schaltungsanordnung zum Auffinden der Übertragung ausgewählter und in den
Programmwunschspeicher eingespeicherter
Programmsendungen wird nachfolgend anhand
des in Fig. 3 dargestellten Zustandsdiagramms
der Schaltungsanordnung näher erläutert. Im
Feld a) dieses Diagramms sind schematisch die
im Programmwunschspeicher gespeicherten
Programmwünsche PW1 bis PW6 und die im
Markierungsfeld der Daten dieser Programmwünsche enthaltenen Markierungen als Balken
dargestellt. Zeile b) dieses Diagramms stellt die
Sender dar, auf die die Abstimmschaltung 2 eingestellt ist. Die Ziffer in den Balkenabschnitten 27
ist die Zählziffer des Programmwunsches PW mit
dessen Senderabstimmdaten die Abstimmschaltung 2 eingestellt ist. Die Zeile c) enthält die Datenkoinzidenzsignale DKS des Ausgangs 28 der Datenvergleicheranordnung 9 und das Pausensignal P an den Ausgängen der Pausenschaltung
10, die Zeile d) die Laufzeit der Übertragungszeituhr 21, die Zeile e) die Einschaltzeit der Aufnahme- und/oder Wiedergabeanordnung 6 für die
Aufnahme und/oder Wiedergabe der im Programmwunschspeicher 14 gespeicherten Programmwünsche PW1 bis PW6, die Zeile f) enthält
die Ausgangssignale KK des Ausganges 29, die
die Datenabtrennschaltung dann erzeugt, wenn
sie keine Sendungskennung erkennt. Die Zeile g)
des in Fig. 3 dargestellten Diagramms enthält
das Zeitsignal T1 eines in einer Kennungsausfallschaltung 30 enthaltenen Zeitgliedes, und die
Zeitachse $t_p$ stellt die Uhrzeit der Kalenderuhr 24
mit den Prüfzeitpunkten $t_{p1}$ bis $t_{p19}$ dar. In die
DKS-Signale der Zeile c) sind die Sender S1 bis
S6 eingetragen, auf die Abstimmschaltung zwar
eingestellt ist und während deren Empfang das
DKS-Signal auftritt.

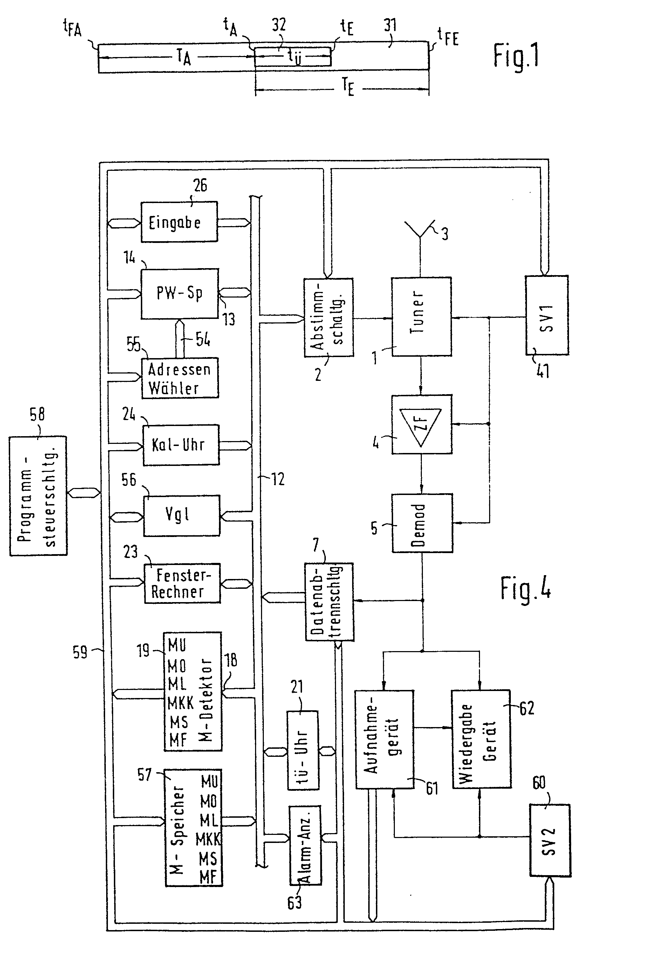

Vor dem Prüfzeitpunkt $t_{p1}$ vergleicht die Zeitvergleicheranordnung 17 die Beginnzeiten $t_A$ der
im Programmwunschspeicher 14 gespeicherten
Programmwünsche mit einer um eine Vorlaufzeit
$T_A$ im Zeitfensterrechner 23 vergrösserten Uhrzeit
$t_p$ der Kalenderuhr 24. Das Zeitfenster 31, das
einem Programmwunsch 32 zugeordnet ist und
das in Fig. 1 schematisch durch einen Balken 31
dargestellt ist, wird durch eine Vorlaufzeit $t_A$ zur
Beginnzeit $t_A$ des Programmwunsches und durch
eine Nachlaufzeit $T_E$ zur Beginnzeit $t_A$ des Programmwunsches gebildet, so dass das Zeitfenster zwischen dessen Anfangszeit $t_{FA}$ und dessen
Fensterendzeit $t_{FE}$ liegt. Die Daten des im Programmwunschspeicher 14 gespeicherten Programmwunsches 32 enthalten beispielsweise die
Beginnzeit $t_A$ und die Endzeit $t_E$ des Sendungsprogrammes des gespeicherten Programmwunsches. Diese Zeiten $t_A$ und $t_E$ grenzen die in den
Daten der Programmangaben enthaltene geplante Übertragungszeit $t_ü$ ein. Solange die Zeitdatenvergleicheranordnung 17 keine Zeitdatenübereinstimmung erkennt, ist nur die Zeitvergleicheranordnung 17 mit ihren zugehörigen Schaltungen
und der Kalenderuhr 24, der Programmwunschspeicher 14 mit seinen zugehörigen Schaltungen
und der Markierungsdetektor 19 im Empfangsgerät eingeschaltet. Diese Schaltungen weisen in
der Regel eine vernachlässigbare Leistungsaufnahme auf, so dass sie beispielsweise von der
Stromversorgungsquelle einer stand-by-Schaltung oder aus einer Batteriezelle versorgt werden
können. Der Abfrageumlauf des Programmwunschspeichers 14 wird von einem Uhrentakt
UT gesteuert, der über einen elektronischen Umschalter 33 und eine Torschaltung 34 an den Takteingang 35 der Steuerschaltung 25 gelangt. In
diesem Betriebszustand ist eine verhältnismässig
grosse Taktfrequenz möglich, die einen schnellen
Abfrageumlauf des Programmwunschspeichers
erlaubt.

Bei einer Zeitdatenkoinzidenz an der Zeitvergleicheranordnung 17 erzeugt ein Zeitkoinzidenzsignal ZKS über eine Umschalteranordnung 36
ein Fenstermarkiersignal MF im Markierfeld des Programmwunsches, dessen Daten zum Prüfzeitpunkt ausgelesen werden. Der Markierungsdetektor 19 erzeugt aus dieser Fenstermarkierung ein Ausgangssignal SF, das den Fensterrechner 23 auf die Ausgabe der Zeitfensterendezeiten $t_{FE}$ umschaltet, den Takteingang 35 der Steuerschaltung 25 an den Taktausgang 37 eines Taktzählers 38 umschaltet, wenigstens die in der strichpunktierten Umrahmung 39 angeordnete Schaltungsanordnungen des Empfangsgerätes über einen elektronischen Schalter 40 an eine Stomversorgung 41 anschliesst und die Abstimmschaltung 2 zur Einstellung auf die an ihrem Dateneingang anliegenden Abstimmdaten freigibt. Bei jedem Wiederholungstakt WT der Datenabtrennschaltung führt die Datenvergleicheranordnung 9 einen Vergleich zwischen den Ausgangsdaten der Datenabtrennschaltung und den Ausgangsdaten des Programmwunschspeichers durch. Wird dabei während einer vorgegebenen Anzahl von Wiederholtakten WT nicht eine vorbestimmte Zahl von Übereinstimmungen in der Datenvergleicheranordnung 9 festgestellt, erzeugt die Datenvergleicheranordnung kein Datenkoinzidenzsignal DKS. Mit dieser Massnahme wird eine sichere Koinzidenzaussage gewährleistet, auch wenn die Sendungskennung zeitweise mangelhaft übertragen wird. Der Taktzähler 38 erzeugt an seinem Taktausgang 37 ein Taktsignal jedesmal, wenn er die für einen Vergleichablauf an der Datenvergleicheranordnung vorgesehene Zahl Wiederholtakte gezählt hat. Dadurch wird die Steuerschaltung 25 auf den nächsten Abfrageschritt geschaltet, so dass die Daten des nächsten Programmwunsches auf den Datenbus 12 gelangen. Diese Daten enthalten keine Markierungsdaten, so dass sich ein Betriebszustand wie vor dem Prüfzeitpunkt $t_{p1}$ einstellt, bis im Zuge des mit dem Uhrentakt UT gesteuerten Abfrageumlaufes wieder der Programmwunsch PW1 geprüft wird und eine erneute Abstimmung auf dessen Senderdaten erfolgt. Dieser Abfragelauf wiederholt sich mehrmals, was in der Zeile b) des Diagramms der Fig. 3 durch die aneinandergereihten Balkenabschnitte 27 angedeutet wird. In den Prüfzeitpunkten $t_{p2}$ und $t_{p3}$ erhalten ausserdem der Markierdatenplatz des Programmwunsches PW2 und der Markierdatenplatz des Programmwunsches PW3 je eine Fenstermarkierung MF, so dass nach dem Prüfzeitpunkt $t_{p3}$ das Empfangsgerät während eines Abfrageumlaufes des Programmwunschspeichers kurzzeitig auf drei Sender abgestimmt wird, nämlich S1, S2 und S3. Zum Prüfzeitpunkt $t_{p4}$ tritt bei der Überprüfung des Programmwunsches PW1 vor einen Ausgangtakt des Taktzählers 38 am Ausgang der Datenvergleicheranordnung 9 ein Datenkoinzidenzsignal auf (Diagramm-Zeile c)), das den Takteingang 35 der Steuerschaltung 25 mittels der Torschaltung 34 sperrt und die Aufnahme- und/oder Wiedergabeanordnung 6 zur Aufnahme bzw. Wiedergabe der empfangenen Programmsendung einschaltet (Diagramm-Zeile e)). Ausserdem wird durch die Einschaltflanke dieses Signales die Übertragungszeituhr 21 auf die in den gespeicherten Programmdaten vorgegebene Übertragungszeit $t_ü$ eingestellt. Diese Übertragungszeituhr vergleicht laufend die eingestellte Übertragungszeit tü mit der Wiedergabezeit tw der Programmsendung und erzeugt an der Rückflanke eines aus dem Datenkoinzidenzsignal DKS an einer·Rückflankenverzögerungsschaltung 42 erzeugten Sendungssignals SS bei einer Wiedergabezeit, die gleich oder grösser ist als die eingestellte Übertragungszeit $t_ü$ ein erstes Ausgangssignal, das auf dem Markierdatenplatz des ausgelesenen Programmwunsches PW1 zum Prüfzeitpunkt $t_{p5}$ ein Löschmarkierzeichen ML einspeichert, oder bei einer Wiedergabezeit $t_w$ der übertragenen Sendung, die kleiner ist als die in der Übertragungszeituhr 21 eingestellte Übertragungszeit $t_ü$ ein zweites Ausgangssignal, das in dem Markierdatenfeld des aus dem Programmwunschspeicher ausgelesenen Programmwunsches PW2 zum Zeitpunkt $t_{p6}$ ein Unvollständigkeitsmarkierzeichen MU einspeichert. In dem dargestellten Ausführungsbeispiel ist die Übertragung des Programmwunsches 1 vom Sender S1 zu einem späteren Zeitpunkt ($t_{t4}$) erfolgt als in den Programmdaten des Programmwunsches TW1 im Programmwunschspeicher angegeben ist. Dadurch hat sich die Übertragungszeit des Programmwunsches PW1 mit der Übertragungszeit des Programmwunsches PW2 überlappt, so dass der in die Übertragungszeit des Programmwunsches PW1 fallende Teil der Sendung des Programmwunsches PW2 nicht empfangen werden konnte und die im Empfangsgerät wiedergegebene Programmsendung des Programmwunsches PW2 unvollständig ist.

Anstelle der Markierung des Markierungsdatenplatzes des aufgenommenen Programmwunsches PW1 kann in einem weiteren Ausführungsbeispiel dieser Programmwunsch mit dem ersten Ausgangssignal der Übertragungszeituhr 21 im Programmwunschspeicher gelöscht werden, so dass diese Speicherzeile für eine neue Eingabe eines Programmwunsches frei ist.

Stellt die Zeitvergleicheranordnung 17 bei einem Programmwunsch, dessen auf dem Datenbus 12 befindliche Daten ein Fenstermarkierzeichen MF enthalten, eine Zeitkoinzidenz mit dessen Fensterendezeit $t_{FE}$ fest, wird durch das Zeitkoinzidenzsignal ZKS auf dem Markierplatz der Daten des ausgelesenen Programmwunsches PW3 zum Zeitpunkt $t_{p9}$ ein Null-Markierzeichen MO eingeschrieben, das kenntlich macht, dass innerhalb der Fensterzeit des Programmwunsches PW3 die Sendung des Programmwunsches PW3 nicht empfangen wurde.

Bei jedem Abfrageumlauf des Programmwunschspeichers 14, bei dem der Markierungsdetektor 19 eine Null-Markierung MO oder eine Unvollständig-Markierung MU erkennt, erzeugt er an seinem Ausgang ein entsprechendes Ausgangssignal SO bzw. SU, für eine Alarmschaltung 43. Diese Alarmschaltung zeigt dem Benutzer an, dass ein im Programmwunschspeicher eingespeicherter Programmwunsch vom Empfangsgerät nicht empfangen wurde oder unvollständig aufgenommen wurde. Diese angezeigten Programmwünsche und die mit einer Löschungsmarkierung ML versehenen Programmwünsche kann der Benutzer durch hier nicht näher dargestellte Mittel aus dem Programmwunschspeicher löschen.

Überträgt ein Sender keine Sendungskennung, wie beispielsweise der Sender des Programmwunsches PW4, erzeugt die Datenabtrennschaltung beim Empfang dieses Senders am Ausgang 29 ein Signal SKK, das kennzeichnet, dass die Datenabtrennschaltung beim empfangenen Sender kein Sendungskennungssignal erkennt. Dieses Ausgangssignal SKK schaltet den Ausgang der Kalenderuhr 24 direkt an den uhrseitigen Eingang der Zeitvergleicheranordnung 17 und an der Umschalteanordnung 36 den Ausgang der Zeitvergleicheranordnung an den Takteingang einer Speicherschaltung 44, die in die RS-Stellung eingestellt ist. Sobald die Zeitvergleicheranordnung 17 im Zeitpunkt $t_{p12}$ eine Zeitkoinzidenz der Uhrzeit $t_p$ der Kalenderuhr 24 mit der Beginnzeit $t_A$ der Daten des Programmwunsches PW4 feststellt, schaltet das Zeitkoinzidenzsignal ZKS die Speicherschaltung in die Setzstellung S. Das Ausgangssignal dieser Speicherschaltung 44 bildet das Sendungssignal SS der Datenvergleicheranordnung 9 einschliesslich der Schaltung 42 nach und schaltet die Eingangsschaltung 45 der Zeitvergleicheranordnung 17 auf den Empfang der Endezeit $t_E$ der Daten des Programmwunsches PW4 um. Erkennt nach Ablauf der in den Daten des Programmwunsches PW4 gespeicherten Zeit der Aufnahme und/oder Wiedergabe des Programmwunsches PW4 die Zeitvergleicheranordnung 17 die Endezeit $t_E$ des Programmwunsches PW4, setzt das erzeugte Zeitkoinzidenzsignal ZKS die Speicherschaltung 44 wieder in die RS-Stellung. Dadurch ist die Aufnahme und/oder Wiedergabe der Sendung des Senders des Programmwunsches PW4 innerhalb der im Programmwunschspeicher vorgegebenen Zeiten für den Programmwunsch PW4 durchgeführt und die Schaltungsanordnung wieder in den Abfragezustand gesetzt.

Die in den Programmwunschspeicher aufzunehmenden Programmdaten eines Senders, der keine Sendungskennung überträgt, können am Markierdatenplatz ein Markierzeichen MKK«keine Kennung» enthalten. Dies ist im Diagrammteil a) der Fig. 3 durch den gestrichelt dargestellten Markierbalken 46 des Programmwunsches PW4 angedeutet. In einer besonderen Ausgestaltung des Markierungsdetektors 19 erkennt dieser bei der Abfrage des Programmwunsches PW4 dieses Markierungszeichen MKK und setzt es in ein dem Ausgangssignal der Datenabtrennschaltung 7 entsprechendes Signal SKK um.

Bei der Übertragung des Programmwunsches PW5 vom Sender S5 tritt zwischen den Zeitpunkten $t_{p13}$ und $t_{p14}$ eine Unterbrechung der Sendung des Programmwunsches 5 auf, während der der Sender in der Sendungskennung ein Pausenzeichen P überträgt. Die Pausenschaltung 10 erkennt dieses Pausenzeichen P, bildet an einem Ausgang 47 das Sendungssignal SS der Datenvergleicheranordnung nach und erzeugt an einen Ausgang 48 ein Sperrsignal, das während des Pausensignals P die Zeitzählung der Übertragungszeituhr 21 an einem Sperreingang 49 und die Aufnahme und/oder Wiedergabe durch Sperren einer Torschaltung 50 unterbricht. Im weiteren Verlauf der Übertragung des Programmwunsches PW5 ist im Diagramm der Fig. 3 zwischen dem Zeitpunkt $t_{p15}$ und $t_{p16}$ ein kurzzeitiger Ausfall des den Programmwunsch PW5 übertragenden Senders S5 dargestellt. Einen derartigen Senderausfall erkennt die Kennungsausfallschaltung 30 dadurch, dass die Datenabtrennschaltung 7 noch während des Daseins des Sendungssignales SS ein SKK-Signal erzeugt. Die Kennungsausfallschaltung 30 schaltet während einer vorbestimmten Zeit T1, die im Diagramm Zeile g) dargestellt ist, eines Zeitgliedes die Pausenschaltung 10 ein. Dauert die Ausfallzeit des Senders länger als die Zeit T1 des Zeitgliedes, beendet die Pausenschaltung beim Ausschalten den Übertragungszustand des Empfangsgerätes und schaltet in den Abfrageumlaufzustand zurück. Da die Übertragungszeituhr 21 in diesem Fall noch nicht abgelaufen ist, speichert sie in den Markierdatenplatz des Programmwunsches PW5 eine Unvollständig-Markierung MU ein.

An einem Steuereingang 51 überprüft die Übertragungszeituhr 21 ausserdem die Einschaltzeit der Aufnahmeanordnung des Empfangsgerätes oder die Einschaltzeit einer an das Empfangsgerät angeschlossenen Aufnahmeordnung. Ist diese Aufnahmezeit $t_w$ kleiner als die in der Übertragungszeituhr eingestellte Übertragungszeit $t_ü$ am Ende der Übertragung des Programmwunsches PW6, beispielsweise weil die Aufnahmeanordnung wegen Bandmangels vorzeitig ausschaltet, speichert am Ende der Übertragung des Programmwunsches PW6 ein Ausgangssignal der Übertragungszeituhr 21 eine Unvollständig-Markierung MU in den Markierdatenplatz des Programmwunsches PW6 im Programmwunschspeicher 14 ein.

In einer besonderen Ausgestaltung enthält das in Fig. 2 dargestellte Ausführungsbeispiel eines Empfangsgerätes vor dem elektronischen Schalter zur Einschaltung der Stromversorgung 41 für die Signalverarbeitungsschaltungen des Empfangsgerätes eine Abschaltverzögerung 52, deren Abschaltverzögerungszeit gleich oder geringfügig grösser ist als ein mit dem Uhrentakt UT gesteuerter Abfrageumlauf des Programmwunschspeichers 14.

In einer weiteren Ausgestaltung des dargestellten Ausführungsbeispiels verhindert eine Torschaltung 53, dass bei der Abfrage erledigter Programmwünsche im Programmwunschspeicher ein während der Abfrage auftretendes SKK-Signal wirksam wird.

Der Fensterzeitrechner 23 kann so ausgestaltet sein, dass er bei Programmwünschen, deren Beginnzeit vormittags liegt, ein kleineres Zeitfenster markiert als bei Programmwünschen, deren Beginnzeit nachmittags liegt. Dadurch kann die Einschaltzeit der Abstimmung des Empfangsgerätes noch weiter eingeschränkt werden.

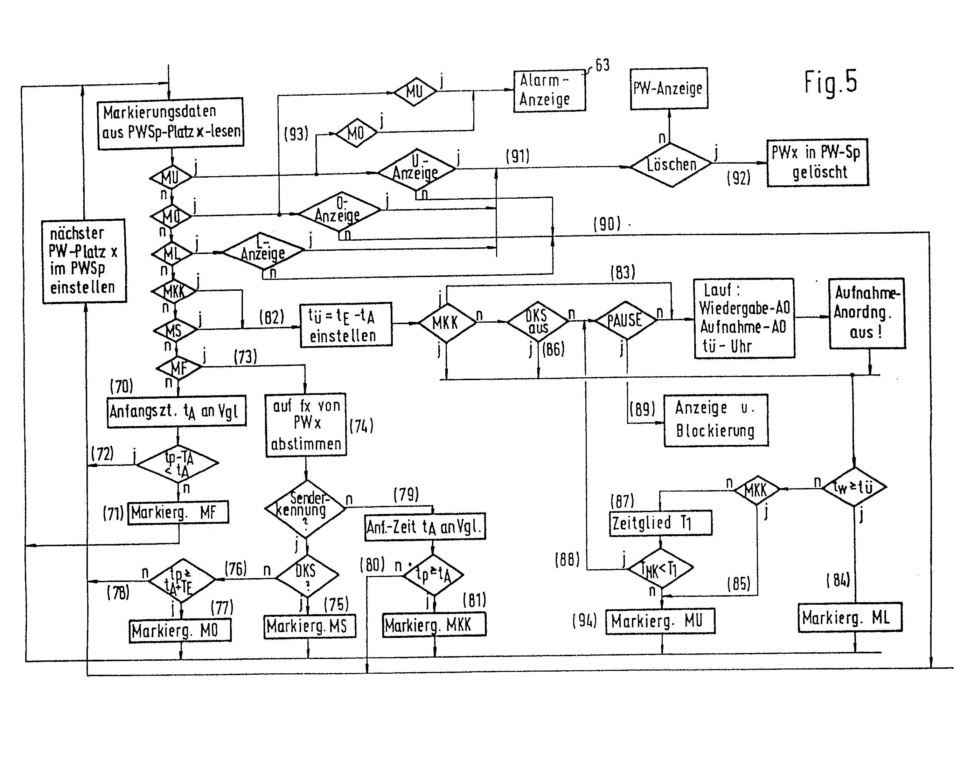

In Fig. 4 ist ein weiteres Ausführungsbeispiel einer Empfangsanlage dargestellt, die einen an eine Antenne 3 angeschlossenen Tuner 1, einen ZF-Verstärker 4 und eine Demodulatorschaltung 5 enthält, an deren Ausgang ein Aufnahmegerät 61 und ein Wiedergabegerät 62 angeschlossen sind. Ausserdem enthält die Empfangsanordnung eine Schaltungsanordnung zum Auffinden der Übertragung ausgewählter und in einen Programmwunschspeicher eingespeicherter Programmwünsche, die über eine Abstimmschaltung 2 mit dem Tuner und über eine Datenabtrennschaltung 7 mit dem Nutzsignalweg der Empfangsordnung verbunden ist. Diese Schaltung enthält einen Programmwunschspeicher 14, der über einen Adressenbus 54 mit einem Adressenwähler 55 verbunden ist, eine Kalenderuhr 24, eine Vergleicheranordnung 56, einen Fensterrechner 23, einen Markierungsdetektor 19, einen Markierzeichenspeicher 57 und eine Programmsteuerschaltung 58. Diese letztgenannten Schaltungen 16 bis 58 können Bestandteile eines Mikroprozessors sein und sind untereinander durch einen Datenbus 12 und ein Steuerbussystem 59 verbunden. Ausserdem sind an diese Busse die Datenabtrennschaltung 7 und die Abstimmschaltung 2 angeschlossen. Die Programmsteuerschaltung 58 steuert den Betriebsablauf der Schaltungsanordnung zum Auffinden und Aufnehmen und Wiedergeben der gespeicherten Programmwünsche im Zusammenwirken mit den Ausgangsdaten der Datenabtrennschaltung 7. Der Wirkungsablauf dieser Schaltungsanordnung ist in Fig. 5 schematisch in einem Flussdiagramm dargestellt. Erkennt der Markierungsdetektor 19 kein Markierzeichen in den Daten des abgefragten Programmwunsches (70), vergleicht die Vergleicheranordnung 56 die Beginnzeit des Programmwunsches mit der um die Fenstervorlaufzeit $T_A$ verminderten Uhrzeit der Kalenderuhr 24 und löst, wenn die Beginnzeit in das vom Zeitfensterrechner 23 vorgegebene Zeitfenster 31 fällt, die Einspeicherung eines Fenstermarkierzeichens in den Daten des abgefragten Programmwunsches aus (71), andernfalls wird der nächste Programmwunsch abgefragt (72). Erkennt der Markierungsdetektor 19 in den Daten eines abgefragten Programmwunsches das Fenstermarkierzeichen MF (73), veranlasst er über die Programmsteuerschaltung die Einschaltung der im Signalübertragungsweg liegenden Schaltungsanordnungen durch Einschalten der Stromversorgung 41 und die Einstellung der Abstimmschaltung 2 auf den in den Daten des abgefragten Programmwunsches enthaltenen Sender (74). Danach wird in der Vergleicheranordnung 56 ein Vergleich der Programmwunschdaten mit den Ausgangsdaten der Datenabtrennschaltung 7 durchgeführt. Stimmen die zu vergleichenden Daten überein, wird die Sendung des Programmwunsches erkannt und das Ausgangssignal der Vergleicheranordnung 56 erzeugt in den Programmwunschdaten ein Sendermarkierungszeichen MS (75). Wird keine Datenübereinstimmung erkannt, vergleicht die Vergleicheranordnung anschliessend die Uhrzeit der Kalenderuhr $t_p$ mit der Endezeit $t_{FE}$ des Zeitfensters 31 des abgefragten Programmwunsches (76). Wird die Fensterendezeit $t_{FE}$ erreicht oder überschritten, löst die Vergleicheranordnung 56 die Einspeicherung eines Null-Markierzeichens MO in die Daten des abgefragten Programmwunsches aus (77); andernfalls wird der nächste Programmwunsch abgefragt (78). Wird bei der Abfrage eines Programmwunsches mit einem Fenstermarkierzeichen MF keine Senderkennung festgestellt (79), wird in der Vergleicheranordnung die Beginnzeit in den Daten des abgefragten Programmwunsches mit der Uhrzeit der Kalenderuhr verglichen und bei einer Übereinstimmung das Markierzeichen MKK in die Daten des abgefragten Programmwunsches gespeichert (81) oder andernfalls die Abfrage des nächsten Programmwunsches ausgelöst (80).

Erkennt der Markierungsdetektor 19 in den Daten eines abgefragten Programmwunsches das Sendungsmarkierungszeichen MS oder das Markierungszeichen MKK (keine Kennung), veranlasst er über sein Ausgangssignal die Einstellung der Übertragungszeit in der Übertragungszeituhr 21, die ebenfalls Bestandteil des Mikroprozessors sein kann und an den Daten- und Steuerbus angeschlossen ist, aus den Daten des abgefragten Programmwunsches (82). Beim Vorliegen des MKK-Markierungszeichens wird gleichzeitig die Aufnahmeanordnung 61 und die Wiedergabeanordnung 62 durch Einschaltung der zugehörigen Stromversorgung 60 und der Lauf der Übertragungszeituhr 21 eingeschaltet (83). Nach Ablauf der in der Übertragungszeituhr 21 eingestellten Übertragungszeit $t_{ü}$ erzeugt die Übertragungszeituhr ein Ausgangssignal, das aus dem Markierzeichenspeicher 57 das Löschmarkierzeichen ML abruft und in die Daten des abgefragten Programmwunsches einspeichert (84), so dass der Markierungsdetektor nun anstelle des MKK-Zeichens das Löschmarkierzeichen ML erkennt und die Daten des nächsten Programmwunsches aus dem Programmwunschspeicher 14 abruft. Wird dagegen die Übertragungszeituhr 21 vor ihrem Ablauf ausgeschaltet, bejspielsweise dadurch, dass sich die Aufnahmeanordnung wegen Bandmangels vorzeitig ausschaltet, dann ruft ein Ausgangssignal der Übertragungszeituhr das Unvollständig-Markierzeichen MU aus dem Markierzeichenspeicher 57 ab zur Einspeicherung in die Daten des abgefragten Programmwunsches (85).

Im Falle des Sendungsmarkierungszeichen MS wird wie beim MKK-Markierungszeichen die Übertragungszeituhr 21 auf die Übertragungszeit $t_{ü}$ der Programmwunschdaten eingestellt und die Wiedergabeanordnung 62, die Aufnahmeanordnung 61 und die Übertragungszeituhr in Lauf gesetzt. Ein Zeitvergleich der Wiedergabezeit mit der eingestellten Übertragungszeit findet in der Vergleicheranordnung 56 jedoch erst statt, wenn die gleiche Vergleicheranordnung während des Empfangs des Senders des Programmwunsches keine Datenübereinstimmung der Daten des Sendungskennungszeichens mit den Daten des Programmwunsches feststellt und das Datenkoinzidenzsignal DKS ausschaltet (86). Ist die Wiedergabezeit gleich oder grösser als die in der Übertragungszeituhr 21 eingestellte Übertragungszeit $t_ü$, wird wieder das Löschmarkierungszeichen ML aus dem Markierzeichenspeicher 57 abgerufen und in den Markierdatenplatz der Daten des abgefragten Programmwunsches eingespeichert. Ist die Wiedergabezeit $t_w$ kleiner als die in der Übertragungszeituhr 21 eingestellte Übertragungszeit $t_ü$ des empfangenen Übertragungswunsches, setzt die Übertragungszeituhr mit einem Ausgangssignal ein Zeitglied in Lauf (87) und schaltet während der Ablaufzeit T1 des Zeitgliedes eine Pausenschaltung ein (88), die während der Ablaufzeit des Zeitgliedes den Lauf der Wiedergabeanordnung oder Aufnahmeanordnung und der Übertragungszeituhr unterbricht. Erzeugt die Vergleicheranordnung 56 während der Ablaufzeit T1 des Zeitgliedes wieder ein Datenkoinzidenzsignal DKS, beispielsweise nach einem kurzzeitigen Ausfall des Empfangs des Senders des Programmwunsches, wird dadurch der Lauf des Zeitgliedes abgebrochen und die Unterbrechung des Laufes der Wiedergabeanordnung, der Aufnahmeanordnung und der Übertragungszeituhr aufgehoben. Beim vollständigen Ablauf des Zeitgliedes veranlasst ein Ausgangssignal des Zeitgliedes die Einspeicherung des Unvollständig-Markierungszeichens MU in den Markierdatenplatz des abgefragten Programmwunsches (94). Die Pausenschaltung, die ebenfalls Bestandteil des Mikroprozessors sein kann, erzeugt in ihrem Pausenzustand ein Ausgangssignal (89), das zur Anzeige der Pause und zur Blockierung des Gerätes während der Pause vorgesehen ist.

Das Erkennen eines Unterbrechungsmarkierungszeichens MU oder eines Null-Markierungszeichens MO oder eines Löschmarkierungszeichens ML erzeugt im Markierungsdetektor 19 ein Ausgangssignal, SU, SO oder SL, das sofort den nächsten Speicherplatz zur Datenausgabe abruft (90), wenn nicht in der Empfangsanordnung eine Einrichtung zur Anzeige der mit diesen Markierungszeichen gekennzeichneten Programmwünschen eingeschaltet ist (91). Die derart angezeigten Programmwünsche können mittels einer Löscheinrichtung aus dem Programmwunschspeicher 14 gelöscht werden (92). Ausserdem wird beim Erkennen eines Unvollständig-Markierungszeichens MU oder eines Null-Markierungszeichens MO jedesmal eine Alarmanzeige 63 angestossen (93), die in der Empfangsanordnung anzeigt, dass im Programmwunschspeicher 14 gespeicherte Programmwünsche nicht oder unvollständig empfangen wurden.

**Patentansprüche**

1. Empfangsgerät der Unterhaltungselektronik

– mit einem Programmwunschspeicher (14), in den die Senderabstimmdaten und Übertragungszeitdaten der aus einer Rundfunk- oder Fernsehprogrammankündigung als Programmwünsche ausgewählten und über eine Eingabevorrichtung (26) in das Empfangsgerät eingegebenen Sendungen von Sendern eingespeichert sind,
– mit einer Zeitvergleicheranordnung (17), der einerseits die Realzeit einer Kalenderuhr (24) des Gerätes und andererseits die im Programmwunschspeicher (14) gespeicherten Übertragungszeitdaten zugeführt werden und die dann, wenn die Uhrzeit in eine durch die Übertragungszeitdaten gekennzeichnete Zeitdauer eines gespeicherten Programmwunsches fällt, ein Zeitkoinzidenzsignal (HKS) erzeugt,
– und mit einem Tuner (1), der mit den im Programmwunschspeicher (14) gespeicherten Daten der Programmwünsche steuerbar ist, dadurch gekennzeichnet,
– dass jeder Beginnzeit ($t_A$) der Übertragungszeitdaten jedes im Programmwunschspeicher (14) gespeicherten Programmwunsches (32) ein Zeitfenster (31) zugeordnet ist, innerhalb dem die Beginnzeit ($t_A$) angeordnet ist,
– dass durch die Zeitvergleicheranordnung (17) beim Realzeitvergleich mit der Kalenderuhr (24) der Tuner (1) nur dann eingeschaltet wird, wenn die Realzeit der Kalenderuhr in das Zeitfenster (31) eines im Programmwunschspeicher (14) gerade abgefragten Programmwunsches (32) fällt,
– und dass eine Datenabtrennschaltung (7) auf der Trägerwelle des Senders (S1), auf die der Tuner (1) mittels der Senderabstimmdaten des gerade abgefragten Programmwunsches (32) abgestimmt ist, zusätzlich zur Programmsendung übertragene Daten einer Programmkennung erkennt und einer Datenvergleicheranordnung (9) zuführt, durch die das Empfangsgerät in den Aufnahme- oder Wiedergabezustand geschaltet wird, wenn die Daten der empfangenen Programmkennung mit gespeicherten Kennungsdaten des gerade abgefragten Programmwunsches (32) übereinstimmen.

2. Empfangsgerät nach Anspruch 1, dadurch gekennzeichnet, dass der Abstand, gegeben durch eine Vorlaufzeit ($T_A$) der Beginnzeit ($t_A$) eines Programmwunsches (32), vom Anfang ($t_{FA}$) des Zeitfensters (31) und der Abstand, gegeben durch eine Nachlaufzeit ($T_E$) der Beginnzeit des Programmwunsches, vom Ende ($t_{FE}$) des Zeitfensters in einem Fensterrechner (23) eingestellt sind.

3. Empfangsgerät nach Anspruch 2, dadurch gekennzeichnet,, dass die Abstände ($T_A$,$T_E$) der Beginnzeit ($t_A$) des Programmwunsches (32) vom Anfang ($t_{FA}$) und Ende ($t_{FE}$) des Zeitfensters (31) abhängig vom Tag und von der Tageszeit eingestellt werden.

4. Empfangsgerät nach einem der vorhergehenden Ansprüche, dadurch gekennzeichnet, dass das Zeitkoinzidenzsignal (ZKS) ein Fenstermarkierzeichen (MF) auslöst, das in einen vorbestimmten Markierdatenplatz des im Programmwunschspeicher (14) gespeicherten Programmwunsches (PW1...) eingespeichert wird, der für die Zeitkoinzidenz ausgelesen wurde.

5. Empfangsgerät nach einem der vorhergehenden Ansprüche, dadurch gekennzeichnet, dass bei einem Vergleich der von der Datenabtrennschaltung (7) der Datenvergleicheranordnung (9, 56) zugeführten Daten der Programmkennung mit den aus dem Programmwunschspeicher (14) ausgelesenen Kennungsdaten eines gespeicherten Programmwunsches (PW1) die Datenvergleicheranordnung erst dann ein Datenkoinzidenzsignal (DKS) erzeugt, wenn innerhalb einer vorgegebenen Anzahl von Wiederholtakten (WT) der Programmkennung die Anzahl der Erkennungen der Datenübereinstimmung eine vorgegebene Zahl erreicht, und dass die Fortschaltung auf den nächsten Abfrageschritt eines Abfrageumlaufes des Programmwunschspeichers beim Überschreiten der vorgegebenen Anzahl von Wiederholtakten ausgelöst wird.

6. Empfangsgerät nach einem der vorhergehenden Ansprüche, dadurch gekennzeichnet, dass die Zeitvergleicheranordnung (17) ein Warnsignal erzeugt, wenn die Nachlaufzeit ($T_E$) eines nicht empfangenen Programmwunsches (PW3) überschritten wird, und dass der im Programmwunschspeicher (14) befindliche unerledigte Programmwunsch ein Nullmarkierungszeichen (MO) erhält.

7. Empfangsgerät nach einem der vorhergehenden Ansprüche, gekennzeichnet durch eine an den Programmwunschspeicher (14) angeschlossene Übertragungszeituhr (21), die bei Beginn eines Datenkoinzidenzsignals (DKS) aus den gespeicherten Programmdaten ($t_A$, $t_E$) des der Datenvergleicheranordnung (9, 56) zugeführten Programmwunsches die Übertragungszeit ($t_ü$) des Programmwunsches bildet und die ein die Daten des abgefragten Programmwunsches mit einem Unvollständig-Markierzeichen (MU) versehendes Ausgangssignal erzeugt, wenn die Dauer ($t_w$) des Datenkoinzidenzsignals oder die Zeit des wirksam geschalteten Zustandes der Wiedergabe- oder Aufnahmeanordnung (6, 62) kleiner ist als die eingestellte Übertragungszeit.

8. Empfangsgerät nach einem der vorhergehenden Ansprüche, gekennzeichnet durch eine an den Signalausgang (29) der Datenabtrennschaltung (7) angeschlossene Pausenschaltung (10), die während eines vom empfangenen Sender ausgestrahlten und von der Datenabtrennschaltung decodierten Pausenzeichens (P) in einen Pausenzustand geschaltet ist und in diesem Betriebszustand die Wiedergabe oder Aufnahme der empfangenen Sendung, die Zeitzählung der Übertragungszeituhr (21) und eine Änderung der Abstimmeinstellung der Abstimmschaltung des Tuners (1) blockiert.

9. Empfangsgerät nach Anspruch 7, dadurch gekennzeichnet, dass ein Zeitglied einer Kennungsausfallschaltung (30) ein Zeitsignal (T1) einer vorbestimmten Länge erzeugt, wenn während eines abschaltverzögerten Datenkoinzidenzsignals (DKS) der Signalausgang (29) der Datenabtrennschaltung (7) ein Signal (SKK) erzeugt, das eine fehlende Sendungskennung des empfangenen Senders kennzeichnet, und dass während des Zeitsignals des Zeitgliedes die Pausenschaltung (10) eingeschaltet ist.

10. Empfangsgerät nach einem der vorhergehenden Ansprüche, dadurch gekennzeichnet,
– dass die Datenabtrennschaltung (7) ein Signal (SKK) erzeugt, wenn sie keine Programmkennung des empfangenen Senders erkennt,
– dass mittels dieses Signals die Zeitvergleicheranordnung (17) so eingestellt wird, dass sie dann ein Zeitkoinzidenzsignal (ZKS) erzeugt, wenn die Realzeit ($t_p$) der Kalenderuhr (24) mit der in den Daten des im Programmwunschspeicher (14) abgefragten Programmwunsches (PW4) enthaltenen Beginnzeit ($t^A$) übereinstimmt,
– und dass das Empfangsgerät nach Auftreten des Zeitkoinzidenzsignals während der in den Übertragungszeitdaten ($t_A$, $t_E$) des abgefragten Programmwunsches gespeicherten Übertragungszeit ($t_ü$) auf den Sender des Programmwunsches abgestimmt und in den Aufnahme- oder Wiedergabezustand geschaltet ist.

**Claims**

1. Consumer electronics receiver
– comprising a selected-program memory (14) in which the station tuning data and the transmission-time data relating to programs of stations selected from a radio or TV guide and input into the receiver via an input device (26) are stored,
– comprising a comparator (17) to which there are fed, on the one hand, the real time of a calendar clock (24) of the receiver and, on the other hand, the transmission-time data as stored in the selected-program memory (14) and which, when the clock time falls into a period of a stored selected program characterized by the transmission-time data, produces a time coincidence signal (HKS),
– and comprising a tuner (1) which is capable of being controlled by the selected-program data as stored in the selected-program memory (14), characterized in
– that to each beginning time ($t_A$) of the data of each selected program (32) as stored in the selected-program memory (14) there is assigned one time window (31) within which the beginning time ($t_A$) lies,
– that the time comparator (17), as the real time is being compared with the calendar clock (24), only switches on the tuner (1) when the real time of the calendar clock falls in the time window (31) of a selected program (32) which has just been interrogated from the selected-program store (14),
– and that a data-disconnect circuit (7) modulated on the carrier frequency of the station (S1), to which frequency the tuner (1) is tuned by means of the station tuning data of the selected program (32) just interrogated, recognizes, in addition to the program transmission, transmitted data of a program identification and feeds these to a data comparator (9) by which the receiver is switched to the recording or reproducing state if the data of the program identification coincide with the stored identification data of the selected program (32) just interrogated.

2. A receiver as claimed in Claim 1, characterized in that the space resulting from a lead time interval $(T_A)$ between the beginning time $(t_A)$ of a selected program (32) and the beginning $(t_{FA})$ of the time window (31), as well as the space resulting from a lag time interval $(T_E)$ between the beginning time of the selected program and the end $(t_{FE})$ of the time window are set in a time window computer (23).

3. A receiver as claimed in Claim 2, characterized in that said time intervals $(T_A, T_E)$ between the beginning time $(t_A)$ of the selected program (32) and the beginning $(t_{FA})$ an the end $(t_{FE})$ of the time window (31) are set depending on the date and the time of day.

4. A receiver as claimed in any one of the preceding claims, characterized in that said time coincidence signal (ZKS) triggers a window marking signal (MF) which is stored in a predetermined marking data position of the selected-program memory (14) intended for the data of the selected program (PW1...) which has been read out for the time coincidence.

5. A receiver as claimed in any one of the preceding claims, characterized in that, when the station identification data fed by the data-disconnect circuit (7) to the data comparator (9; 56) are compared with the identification data of a stored selected program (PW1), the comparator only produces a data coincidence signal (DKS) if, within a predeterminded number of repetition clocks (WT) of the station identification, the number of recognitions of data coincidences reaches a predetermined number, and that the stepping-on of the interrogation cycle of the selected-program memory to the next interrogation step is triggered when the predetermined number of repetition clocks is exceeded.

6. A receiver as claimed in any one of the preceding claims, characterized in that the comparator (17) produces a warning signal if the lag time interval $(T_E)$ of a selected program (PW3) which has not been received is exceeded and that the selected program stored in the selected-program memory (14), which has not been dealt with, receives a zero marking signal (MO).

7. A receiver as claimed in any one of the preceding claims, characterized by a transmission time clock (21), connected to said selected-program memory (14), which at the beginning of a data coincidence signal (DKS) forms the transmission time $(t_{\ddot{u}})$ of the selected program from the stored program data $(t_A, t_E)$ of the selected program fed to the data comparator (9; 56) and which produces an output signal providing the data of the interrogated selected program with an incompleteness-marking signal (MU) when either the duration $(t_W)$ of the data coincidence signal or the time of operation of the reproduction or recording device (6, 62) which has been put into operation is shorter than the set transmission time.

8. A receiver as claimed in any one of the preceding claims, characterized by a pause circuit (10) connected to the signal output (29) of said data-disconnect circuit (7), which, during a pause (interval) signal (P) transmitted by the received station and decoded by the data-disconnect circuit (7), is switched to a pause (interval) state and, in this particular operating state, blocks the reproduction or recording of the received program, the time counting of the transmission time clock (21) and a changing of the tuning setting of the tuning circuit of the tuner (1).

9. A receiver as claimed in Claim 7, characterized in that a timing element of an identification-failure circuit (30) produces a time signal (T1) of a predetermined length if, during a switch-off-delayed data coincidence signal (DKS), a signal (SKK) appears at the signal output (29) of said data-disconnect circuit (7), marking a missing program identification of the received station, and that said pause (interval) circuit (10) is turned on during the time signal of said timing element.

10. A receiver as claimed in any one of the preceding claims, characterized in
– that said data-disconnect circuit (7) produces a signal (SKK) if it does not recognize a program identification of the received station,
– that, by means of this signal, the time comparator (17) is adjusted in such a way that it produces a time coincidence signal (ZKS) if the real time $(t_p)$ of the calendar clock (24) is in agreement with the beginning time $(t_A)$ contained in the data of the selected program (PW4) interrogated in the selected-program memory (14), and
– that the receiver, following the occurrence of the time coincidence signal during the transmission time $(t_{\ddot{u}})$ stored in the transmission-time data $(t_A, t_E)$ of the interrogated selected program, is tuned to the station transmitting the selected program and is switched to the recording and/or reproducing state.

**Revendications**

1. Récepteur d'électronique grand public comprenant:

– une mémoire de programmes sélectionnées dans laquelle sont enregistrées les données d'accord sur l'émetteur et les données d'horaire de diffusion d'émissions venant d'émetteurs, sélectionnées comme programmes souhaités dans une annonces de programmes de radiodiffusion ou de télévison et introduites dans le récepteur par un dispositif d'entrée (26),
– un comparateur de temps (17), auquel sont fournies, d'une part, l'heure courante d'une horloge calendaire (24) du récepteur et, d'autre part, les données d'horaires de diffusion enregistrées dans la mémoire de programmes (14), et qui produit alors un signal de coïncidence de temps (HKS), lorsque l'heure de l'horloge tombe dans une durée déterminée par les données d'horaire de diffusion d'un programme souhaité enregistré,

– ainsi qu'un tuner (1) pouvant être commandé par les données de programmes souhaités, enregistrées dans la mémoire de programmes sélectionnés (14), caractérisé en ce que:

– à chaque horaire de début $(t_A)$ des données d'horaire de diffusion de programmes souhaités (32) enregistrés chacun dans la mémoire de programmes sélectionnés (14), il est attribué une fenêtre temporelle (31) dans laquelle se trouve l'horaire de début $(t_A)$

– le tuner (1) est mis en circuit par le comparateur de temps (17) seulement en cas d'égalité avec l'heure de l'horloge calendaire (24), lorsque l'heure courante tombe dans la fenêtre temporelle (31) d'un programme souhaité (32) en cours d'interrogation, et

– sont prévus en outre un circuit séparateur de données (7) qui reconnaît une identification de programme à partir de données portées, en même temps que le programme diffusé, par une onde porteuse de l'émetteur (S1) sur laquelle est accordé le tuner (1), par le moyen des données d'accord sur l'émetteur du programme souhaité (32) en cours d'interrogation, ainsi qu'un comparateur de données (9), par lesquels le récepteur est commuté dans un état de réception ou de restitution, lorsque les données d'identification de programme reçues concordent avec les données d'identification enregistrées du programme souhaité (32) en cours d'interrogation.

2. Récepteur conforme à la revendication 1, caractérisé en ce que l'intervalle, défini par un temps d'avance $(T_A)$, entre l'horaire de début $(t_A)$ d'un programme souhaité (32) et le début $(t_{FA})$ de la fenêtre temporelle (31) et l'intervalle défini par un temps de retard $(T_E)$, entre l'horaire de début du programme souhaité et la fin $(t_{FE})$ de la fenêtre temporelle sont déterminés par un calculateur de fenêtre temporelle (23).

3. Récepteur conforme à la revendication 2, caractérisé en ce que lesdits intervalles $(T_A, T_e)$ entre l'horaire de début $(t_A)$ d'un programme souhaité (32) et le début $(t_{FA})$ et la fin $(t_{FE})$ de la fenêtre temporelle (31) sont définis en fonction du jour et de l'heure.

4. Récepteur selon l'une quelconque des revendications précédentes, caractérisé en ce que ledit signal de coïncidence de temps (ZKS) déclenche un signal de marquage de fenêtre (MF) qui est enregistré dans une position de données de marquage prédéterminée du programme souhaité (PW1...) enregistré dans la mémoire de programmes sélectionnées (14), lu pour la coïncidence de temps.

5. Récepteur selon l'une quelconque des revendications précédentes, caractérisé en ce que, lorsque les données d'identification de programme fournies au comparateur de données (9; 56) par le séparateur de données (7) concordent avec les données d'identification d'un programme souhaité enregistré (PW1...) lues dans la mémoire de programmes sélectionnés (14), le comparateur de données fournit alors d'abord un signal de coïncidence de données (DKS), lorsque, à l'intérieur d'un nombre prédéterminé de périodes de répétition (WT) de l'identification de programme, le nombre de détections de concordance de données atteint une valeur prédéterminée, et en ce que la progression du cycle d'interrogation de la mémoire de programmes sélectionnées vers le pas d'interrogation suivant est déclenchée par le dépassement du nombre prédéterminé de périodes de répétition.

6. Récepteur selon l'une quelconque des revendications précédentes, caractérisé en ce que le comparateur de temps (17) produit un signal d'avertissement lorsque le temps de retard $(T_E)$ d'un programme souhaité non reçu (PW3) est dépassé et en ce qu'un signal de marquage nul (MO) est inscrit dans le programme souhaité non desservi qui se trouve dans la mémoire de programmes sélectionnées (14).

7. Récepteur selon l'une quelconque des revendications précédentes, caractérisé en ce qu'il comprend une horloge de transmission (21) connectée à ladite mémoire de programmes sélectionnés (14) et qui, au début d'un signal de coïncidence de données (DKS), est réglée sur la durée de diffusion $(t_{ü})$ provenant des données de programme enregistrées $(t_A, t_E)$ du programme souhaité fourni au comparateur de données (9; 56) et qui produit un signal de sortie fournissant les données du programme souhaité interrogé avec un signal de marquage d'insuffisance (MU) lorsque, soit la durée $(t_w)$ du signal de coïncidence de données ou celle de l'état de commutation utile du dispositif de réception ou de reproduction (6, 62) est plus courte que l'horaire de diffusion défini.

8. Récepteur selon l'une quelconque des revendications précédentes, caractérisé en ce qu'il comprend un circuit de pause (10) connecté à la sortie de signal (29) dudit séparateur de données (7) lequel, durant un signal de pause (P) transmis par l'émetteur reçu et décodé par le séparateur de données est commuté dans un état de pause et, dans cet état de fonctionnement, bloque la réception ou la reproduction du programme reçu, le comptage de temps de l'horloge de transmission (21), ainsi qu'une modification du réglage d'accord du circuit d'accord du tuner (1).

9. Récepteur conforme à la revendication 7, caractérisé en ce qu'un circuit de temporisation d'un circuit de défaut d'identification (30) produit un signal de temps (T1) d'une longueur prédéterminée lorsque, au cours d'un signal de coïncidence de données (DKS) retardé par mise hors circuit, à la sortie de signal (29) du séparateur de données (7), il est produit un signal (SKK) marquant l'absence d'identification de programme de l'émetteur reçu, et en ce que ledit circuit de pause (10) est activé durant le signal de temps de cet élément de temporisation.

10. Récepteur selon l'une quelconque des revendications précédentes, caractérisé en ce que:
– ledit séparateur de données (7) produit un signal (SKK) lorsqu'il ne reconnaît pas l'identification de programme de l'émetteur reçu,

– au moyen de ce signal, le comparateur de temps (17) est ajusté de façon qu'il produise un signal de coïncidence de temps (ZKS) lorsque l'heure courante ($t_p$) de l'horloge calendaire (24) est conforme à l'horaire de début ($t_A$) contenue dans les données du programme souhaité (PW4) interrogé dans la mémoire de programmes sélectionnées (14) et

– le récepteur est accordé sur l'émetteur du programme souhaité et il est commuté dans l'état de réception ou de restitution, après que soit survenu le signal de coïncidence de temps durant le temps de diffusion ($t_A$, $t_E$) du programme souhaité interrogé.

Fig.1

Fig.4

Fig. 2

0118 104

PW
Markierg.

Fig.3

a)

PW1
MF | ML
PW2
MF | MII.
PW3
MF | MO
PW4
MF(MKK) | ML
{MKK}
46
PW5
MF | ML
27
PW6
MF | MU

| Abstimmg.a.Sender | 1 1 1 1 | 2 1 2 | 3 1 2 3 | 1 | 2 | 3 | 4 3 4 | 5 3 4 5 | 4 5 | 4 | 6 5 6 5 | 6 6 6 6 | | b) |
|---|---|---|---|---|---|---|---|---|---|---|---|---|---|---|
| DKS (Sendungs-Signal SS) | | | | S1 | S2 | | | S4 | S5 P S5 S5 | | S6 | | c) |
| tü | | | | tü=tE-tA | <tE-tA | | | tü=tE-tA | tü=tE-tA | | tü<tE-tA | | d) |
| Aufnahme(Wiedergabe | | | | PW1 | PW2 | | | PW4 | PW5 PW5 5 | | PW6 | | e) |
| Keine Kenng.(SKK) | | | | | | | | | | | | | f) |
| Zeitglied T1 | | | | | | | | | | | | | g) |
| tp (K-Uhr) | | | | | | | | | | | | | h) |

tp1  tp2  tp3  tp4  tp5  tp6 tp7  tp8  tp9  tp10  tp11  tp12  tp13  tp14 tp16  tp18  tp19
tp15  tp17

0 118 104

**Fig.5**

Markierungsdaten aus PWSp-Platz x-lesen

nächster PW-Platz x im PWSp einstellen

MU — j → Alarm-Anzeige 63

MO — j

(93)

PW-Anzeige

U-Anzeige — j — (91) — Löschen — j → PWx in PW-Sp gelöscht

(92)

MU — j

MO — j

O-Anzeige — j

(90)

ML — j — L-Anzeige — j

MKK

MS — j — (82) — $t_{ü} = t_E - t_A$ einstellen — MKK — n — DKS aus — n — PAUSE — n → Lauf: Wiedergabe-AO Aufnahme-AO $t_{ü}$-Uhr → Aufnahme-Anordng. aus!

(83)

(86)

MF — j — (73)

(70) Anfangszt. $t_A$ an Vgl

auf fx von PWx abstimmen (74)

(89) → Anzeige u. Blockierung

(72) j — $t_p - T_A < t_A$ — n

(71) Markierg. MF

Senderkennung? — n — (79) Anf.-Zeit $t_A$ an Vgl.

(87) Zeitglied $T_1$

n — MKK — j

n — $t_w \geqq t_{ü}$ — j

(88)

(76) n — DKS? — n

(80) n — $t_p \geqq t_A$

(78) n — $t_p \geqq t_A + t_E$ — j

(77) Markierg. M0

(75) Markierg. MS

(81) Markierg. MKK

$t_{HK} < T_1$ — n — (85)

(94) Markierg. MU

(84) Markierg. ML

19